# EUROPÄISCHE PATENTSCHRIFT

(11) **EP 4 325 408 B1**
(45) Veröffentlichungstag und Bekanntmachung des Hinweises auf die Patenterteilung: **23.09.2026**
(21) Anmeldenummer: 22190592.0
(22) Anmeldetag: 16.08.2022
(51) Int. Cl.: G06Q 10/10, G06Q 30/018

(54) **VERFAHREN ZUR ÜBERNAHME VON MATERIALIEN UND/ODER WERKSTÜCKEN MIT ZUGESICHERTEN EIGENSCHAFTEN UND/ODER PARAMETERN**
METHOD FOR TAKING OVER MATERIALS AND/OR WORKPIECES WITH ASSURED PROPERTIES AND/OR PARAMETERS
PROCÉDÉ DE PRISE EN CHARGE DE MATÉRIAUX ET/OU DE PIÈCES À USINER PRÉSENTANT DES PROPRIÉTÉS ET/OU DES PARAMÈTRES GARANTIS

(43) Veröffentlichungstag der Anmeldung: 21.02.2024
(73) Patentinhaber: Siemens Mobility AG, 8304 Wallisellen (CH)
(72) Erfinder: Asch, Thomas, 8303 Bassersdorf (CH); Haus, Andreas, 5430 Wettingen (CH)
(74) Vertreter: Siemens Patent Attorneys

(56) Entgegenhaltungen:
- EP-A1- 3 543 940
- LANKO A. ET AL: "Application of RFID combined with blockchain technology in logistics of construction materials", vol. 170, 1 January 2018 (2018-01-01), pages 03032, XP093019495, Retrieved from the Internet <URL:https://www.matec-conferences.org/articles/matecconf/pdf/2018/29/matecconf_spbwosce2018_03032.pdf> DOI: 10.1051/matecconf/201817003032
- BALINT PENZES: "Blockchain Technology in the Construction Industry", INSTITUTION OF CIVIL ENGINEERS, 1 January 2018 (2018-01-01), pages 15 - 17, 20-25, XP055851998, Retrieved from the Internet <URL:https://www.researchgate.net/publication/330524687_Blockchain_Technology_in_the_Construction_Industry> [retrieved on 20211017], DOI: 10.13140/rg.2.2.14164.45443
- ANONYMOUS: "White Paper on Blockchain in Trade Facilitation White Paper on Blockchain in Trade Facilitation", 1 September 2020 (2020-09-01), pages 1 - 159, XP093010297, ISBN: 978-92-1-005254-2, Retrieved from the Internet <URL:https://unece.org/DAM/trade/Publications/ECE-TRADE-457E_WPBlockchainTF.pdf> [retrieved on 20221221]

## Beschreibung

Die vorliegende Erfindung betrifft ein Verfahren zur Übernahme von Materialen und/oder Werkstücken mit zugesicherten Eigenschaften und/oder Parametern.

Im heutigen globalisierten Waren- und Dienstleitungsverkehr kommt dem Vorliegen von zugesicherten Eigenschaften und/oder Parameter bei bestellten Materialien und/oder Werksstücken eine auch hinsichtlich der Produktsicherheit und -haftung ausserordentlich grosse Rolle zu. Beispielhaft können hier im allgemeinen metallische Materialien, die über eine vorgebbare Zusammensetzung und/oder Legierungsparameter verfügen müssen, und metallische Werkstücke genannt werden, die über eine vorgebbare Zusammensetzung und vorgebbare Festigkeits-, Biegungs- und weitere Eigenschaften verfügen müssen. Derartige metallische Materialien und/oder Werkstücke werden beispielsweise in Schienenfahrzeugen, Strassenfahrzeugen, Flugzeugen, Schiffen, Maschinen und dergleichen verbaut. Direkt im Eisenbahnumfeld betreffen derartige metallische Werkstücke beispielsweise auch Elemente von Weichenverstellmechanismen, bei denen das Vorhandensein der zugesicherten Eigenschaften und/oder Parameter zur Gewährleistung der Sicherheit von Mensch und Material von eminent hoher Wichtigkeit ist.

Bei den heutigen Lieferflüssen werden diese Zertifizierungen von zugesicherten Leistungen und/oder Parametern sehr individuell und durch bekannten ERP- oder Branchen-Lösungen bearbeitet. Die Lieferanten erhalten anfänglich eine Bestellung in Form eines pdf- und/oder Papier-Dokuments mit den kundenspezifischen Anforderungen an die bestellten Werkstücke. Auf der Seite des Herstellers werden die bestellten Materialen und/oder Werkstücke vermessen und/oder geprüft, wobei die Messungen und/oder Prüfungen in Form eines sogenannten 3.1-Prüfzeugnisses (ein nach EN DIN 10204 erstelltes Prüfzeugnis) ausgestellt wird. Dieses 3.1-Prüfzeugnis wird dem Übernehmer der Materialien und/oder Werkstücke zusammen mit dem Material und/oder den Werkstücken und/oder bereits vorab in elektronischer Form zugeschickt.

Somit muss dieses 3.1-Prüfzeugnis durch den Übernehmer der Materialien und/oder Werkstücke bei der Warenannahme unterschrieben und in Form eines pdf-Dokuments dem Zulieferer übermittelt und auch in der späteren Lieferkette zu Verfügung gestellt werden.

Somit besteht immer eine gewisse Gefahr, dass die 3:1-Prüfzeugnis «herumvagabundieren» könnten und so nicht mehr zuverlässig auffindbar und auch zu einem deutlich späteren Zeitpunkt möglicherweise nicht mehr verfügbar sein könnten, was insbesondere bei späteren Mängeln, die möglicherweise zu Schaden an Mensch und Material führen, die Zuordnung der Produkthaftung zumindest erschweren könnte. Entsprechende Verfahren und Systeme sind aus dem Stand der Technik bekannt. So offenbart EP 3 543 940 A1)ein computerimplementiertes Verfahren zum Bereitstellen von Daten, insbesondere für eine Konformitätsverfolgung, in einem verteilten peer-to-peer Netz; DOI:10.1051/matecconf/201817003032 offenbart die Verwendung von RFID in Verbindung mit Blockchain Technologie im Kontext der Logistik von Baumaterialien.DOI:10.13140/ rg.2.2.14164.45443 offenbart die Verwendung von Blockchain Technologien im Kontext von Baumaßnahmen und ISBN: 978-92-1-005254-2 offenbart die Verwendung von Blockchain Technologien im Kontext des Handels.

Der vorliegenden Erfindung liegt daher die Aufgabe zugrunde, ein Verfahren zur Übernahme von Materialen und/oder Werkstücken mit zugesicherten Eigenschaften und/oder Parametern anzugeben, mit dem es möglich ist, das Vorliegen dieser zugesicherten Eigenschaften und/oder Parameter bestätigen zu können und zudem auch diesen Nachweis für eine unbegrenzte Zeitdauer und immer wieder abrufbar zur Verfügung zu stellen.

Diese Aufgabe wird erfindungsgemäss durch ein Verfahren zur Übernahme von Materialien und/oder Werkstücken mit zugesicherten Eigenschaften und/oder Parametern gelöst,
umfassend die folgenden Verfahrensschritte:
a) Definieren der Eigenschaften und/oder Parameter, die optional auch Normen und/oder gesetzliche Vorschriften enthalten können;
b) Übertragen der definierten Eigenschaften und/oder Parameter in einen mit einer Distributed Ledger Software programmierten Smart Contract, wobei optional auch in den Normen und/oder gesetzlichen Vorschriften relevante Zahlenwerte abgerufen und in den Smart Contract übernommen werden;
c) Durchführen eines zertifizierten Prüfprozesses für die Materialien und/oder die Werkstücke mit Bezug zumindest auf einen Teil der zugesicherten Eigenschaften und/oder Parameter zur Generierung eines Prüf- und/oder Messdatensatzes;
d) Übertragen des Prüf- und/oder Messdatensates mit Bezug zumindest auf den Teil der zugesicherten Eigenschaften und/oder Parameter in den Smart Contract;
e) Validierung des Prüf- und/oder Messdatensatzes in dem Smart Contract mit Bezug zumindest auf den Teil der zugesicherten Eigenschaften und/oder Parameter;
f) Erteilung einer Lieferfreigabe in Form eines Codes, wie z.B. eine Matrix Codes, im Fall einer positiven Validierung; und
g) Übernehmen der von dem Code freigegebenen Materialien und/oder Werkstücke zur weiteren Verwendung der Materialien und/oder Werkstücke bei dem Übernehmer.

Durch dieses Vorgehen wird mittels der Smart Contracts sichergestellt, dass alle Anforderungen an den Kunden von diesem auch erfüllt werden und weiter keine Lieferungen ermöglicht werden, die nicht vollständig oder mit Abweichungen versehen sind. Die Distributed Ledger Technologie (DLT) mit einer Blockchain für die Datenablage und Datensicherheit im Hintergrund garantiert die Unveränderbarkeit der in dem Smart Contract vorhandenen Daten. Auf diese Weise können die beteiligten Stellen eine erhebliche Zeitersparnis erzielen, weil die Warenkontrollen wegfallen und keine Protokolle mehr verwaltet und auch nicht mehr in Form von pdf-Dokumenten per Email versendet werden müssen. Auch nachfolgende Abteilungen und Prozesse in der späteren Bearbeitungs- und Lieferkette können ohne zusätzlichen Aufwand aus einem ERP-System die Bestätigung des Materials/der Werkstücke mit den zugesicherten Eigenschaften und/oder Parametern beziehen.

In einer vorteilhaften Ausgestaltung der vorliegenden Erfindung kann es vorgesehen sein, dass in den zertifizierten Prüfprozess eingebundene Prüf- und/oder Messmaschinen einen Prüfbericht erstellen können, der in den Prüf- und/oder Messdatensatz eingelesen wird, vorzugsweise in Form eines pdf-Dokuments. Somit können auch sogenannte Zwischenergebnisse der Mess- und Prüfprozesses bereits in den Smart Contract eingefügt werden.

Weiter ist es von Vorteil, wenn alle Daten und/oder Datenänderungen in dem Smart Contract nach einem vorgebbaren Berechtigungskonzept über eine Applikation für ein Smart Phone und/oder über eine webbasierte Oberfläche auf einem Tablet und/oder einem PC verfolgt und überwacht werden.

Bevorzugte Ausführungsbeispiele der vorliegenden Erfindung werden nachfolgend näher erläutert. Dabei zeichnet sich ein bevorzugtes Ausführungsbeispiel für das erfindungsgemässe Verfahren zur Übernahme von Materialien und/oder Werkstücken mit zugesicherten Eigenschaften und/oder Parametern durch die folgenden Verfahrensmerkmal aus:
i) Zunächst sind von einem Besteller die Eigenschaften und/oder Parameter des zu liefernden Materials genau festzulegen. Diese Eigenschaften und/oder Parameter können optional auch Normen und/oder gesetzliche Vorschriften enthalten. So können zum Beispiel bei einem Metall Angaben, wie Materialnummer, Materialbezeichnung, Werkstoffnummer, Normenbezeichnung, Preis, Menge, Form des Roh-Materials, Liefertermin, technische Lieferbedingungen, Verpackungsart und die Chargennummer, definiert werden.

Diese definierten Eigenschaften und/oder Parameter werden in einen mit einer Distributed Ledger Software programmierten Smart Contract übertragen, wobei optional auch in den Normen und/oder gesetzlichen Vorschriften relevante Zahlenwerte abgerufen und in den Smart Contract übernommen werden. Derartige Smart Contract können im Rahmen einer Distributed Ledger Technologie (DLT) realisiert werden. Derartige Blockchain-Technologie ist aktuell mit den Plattformen «Hyperledger Fabric» von der Linux Foundation und dem Projekt «CORDA» der Firma r3 möglich.

Nun wird auf der Seite des Lieferanten ein zertifizierter Prüfprozess für die zu liefernden Materialien und/oder die Werkstücke mit Bezug zumindest auf einen Teil der zugesicherten Eigenschaften und/oder Parameter zur Generierung eines Prüf- und/oder Messdatensatzes; selbstverständlich können auch alle Eigenschaften und/oder Parameter Teil des Prüfprozesses sein, als dessen Ergebnis ein Prüf- und Messdatensatz erstellt wird. Dabei können beispielsweise auch die Maschinen zur Messung oder zu sonstigen Prüfprozessen zertifiziert sein und daher auch zertifizierte Messprotokolle, z.B. in Form einer pdf-Datei für den Prüf- und Messdatensatz zur Verfügung stellen.

Dieser Prüf- und/oder Messdatensatz mit Bezug zumindest auf den Teil der zugesicherten Eigenschaften und/oder Parameter wird nun in den Smart Contract hochgeladen, wo dann die Validierung des Prüf- und/oder Messdatensatzes in dem Smart Contract mit Bezug zumindest auf den Teil der zugesicherten Eigenschaften und/oder Parameter ausgeführt wird. Dabei wird durch in dem Smart Contract hinterlegte Algorithmen geprüft, ob die in dem Prüf- und/oder Messdatensatz bereitgestellten Daten den gewünschten zugesicherten Eigenschaften und/oder Parameter genügen.

Im Fall einer positiven Validierung wird dann eine Lieferfreigabe in Form eines Codes, wie z.B. eine Matrix Codes, erteilt, die das im Lieferumfang befindliche Material kennzeichnet. Auf der Empfängerseite kann der Besteller dann die von dem Code freigegebenen Materialien übernehmen und der weiteren Verwendung überführen.

Wie weiter oben auch schon erwähnt, können in den zertifizierten Prüfprozess eingebundene Prüf- und/oder Messmaschinen einen ebenfalls einen Prüfbericht erstellen, der in den Prüf- und/oder Messdatensatz eingelesen wird, vorzugsweise in Form eines pdf-Dokuments. Somit müssen einzelne Messwerte oder bestimmte Parameter nicht von Hand in den Smart Contract gesendet werden, sondern können in der Zusammenstellung des Prüf- und/oder Messdatensatzes einfach als ein Bestandteil mit aufgeführt werden. Es ist dabei weiter ein besonderer Vorteil, dass alle Datenänderungen in dem Smart Contract nach einem vorgebbaren Berechtigungskonzept über eine Applikation für ein Smart Phone und/oder über eine webbasierte Oberfläche auf einem Tablet und/oder einem PC verfolgt und überwacht werden können. Damit ist für die Teilnehmer des Smart contract eine hohe Transparenz geschaffen, weil jeder Teilnehmer jede Änderungen auch sehen kann.

## Patentansprüche

1. Verfahren zur Übernahme von im Eisenbahnverkehr verwendeten Materialien und/oder Werkstücken mit zugesicherten sicherheitsrelevanten Eigenschaften und/oder Parametern, umfassend die folgenden Verfahrensschritte:
a) Definieren der Eigenschaften und/oder Parameter, die optional auch Normen und/oder gesetzliche Vorschriften enthalten können;
b) Übertragen der definierten Eigenschaften und/oder Parameter in einen mit einer Distributed Ledger Software programmierten Smart Contract, wobei optional auch in den Normen und/oder gesetzlichen Vorschriften relevante Zahlenwerte abgerufen und in den Smart Contract übernommen werden;
c) Durchführen eines zertifizierten Prüfprozesses für die Materialien und/oder die Werkstücke mit Bezug zumindest auf einen Teil der zugesicherten Eigenschaften und/oder Parameter zur Generierung eines zertifizierten und nach EN DIN 10204 erstellten Prüf- und/oder Messdatensatzes;
d) Übertragen des Prüf- und/oder Messdatensatzes mit Bezug zumindest auf den Teil der zugesicherten Eigenschaften und/oder Parameter in den Smart Contract;
e) Validierung des Prüf- und/oder Messdatensatzes in dem Smart Contract durch die darin hinterlegten Algorithmen mit Bezug zumindest auf den Teil der zugesicherten Eigenschaften und/oder Parameter;
f) Erteilung einer Lieferfreigabe in Form eines Codes, wie z.B. eine Matrix Codes, im Fall einer positiven Validierung; und
g) Übernehmen der von dem Code freigegebenen Materialien und/oder Werkstücke zur weiteren Verwendung der Materialien und/oder Werkstücke bei dem Übernehmer.

2. Verfahren nach Anspruch 1,
**dadurch gekennzeichnet, dass**
in den zertifizieren Prüfprozess eingebundene Prüf- und/oder Messmaschinen einen Prüfbericht erstellen, der in den Prüf- und/oder Messdatensatz eingelesen wird, vorzugsweise in Form eines pdf-Dokuments.

3. Verfahren nach Anspruch 1 oder 2,
**dadurch gekennzeichnet, dass**
alle Datenänderungen in dem Smart Contract nach einem vorgebbaren Berechtigungskonzept über eine Applikation für ein Smart Phone und/oder über eine webbasierte Oberfläche auf einem Tablet und/oder einem PC verfolgt und überwacht werden.

## Claims

1. Method for the acceptance of materials and/or workpieces used in rail transport with guaranteed safety-relevant properties and/or parameters, comprising the following method steps:
a) defining the properties and/or parameters that may optionally also include standards and/or legal requirements;
b) transferring the defined properties and/or parameters into a smart contract programmed with distributed ledger software, wherein numerical values relevant within the standards and/or legal requirements are optionally also retrieved and incorporated into the smart contract;
c) carrying out a certified test process for the materials and/or workpieces with regard to at least a portion of the guaranteed properties and/or parameters for the generation of a certified test and/or measurement data set prepared in accordance with EN DIN 10204;
d) transferring the test and/or measurement data set with regard to at least the portion of the guaranteed properties and/or parameters into the smart contract;
e) validating the test and/or measurement data set in the smart contract by way of the algorithms stored therein with regard to at least the portion of the guaranteed properties and/or parameters;
f) issuing a delivery release in the form of a code, such as a matrix code, in the event of a positive validation; and
g) accepting the materials and/or workpieces released by the code for further use of the materials and/or workpieces by the transferee.

2. Method according to claim 1,
**characterised in that**
test and/or measurement machines involved in the certified test process prepare a test report that is fed into the test and/or measurement data set, preferably in the form of a PDF document.

3. Method according to claim 1 or 2,
**characterised in that**
all data changes in the smart contract are tracked and monitored according to a specifiable authorisation concept via an application for a smartphone and/or via a web-based interface on a tablet and/or a PC.

## Revendications

1. Procédé de prise en charge de matériaux et/ou de pièces à usiner utilisés dans le transport ferroviaire et présentant des propriétés et/ou des paramètres pertinents à la sécurité garantis, comprenant les étapes de procédé suivantes :
a) définir les propriétés et/ou les paramètres, lesquels peuvent comprendre, de manière optionnelle, également des normes et/ou des dispositions légales ;
b) transférer les propriétés et/ou les paramètres définis dans un contrat intelligent (smart contract) programmé au moyen d'un logiciel de registre distribué (Distributed Ledger Software), dans lequel des valeurs numériques pertinentes figurant dans les normes et/ou les dispositions légales peuvent également, de manière optionnelle, être extraites et intégrées dans le contrat intelligent ;
c) réaliser un processus de contrôle certifié des matériaux et/ou des pièces à usiner, portant sur au moins une partie des propriétés et/ou des paramètres garantis, afin de générer un jeu de données de contrôle et/ou de mesure certifié, établi conformément à la norme EN DIN 10204 ;
d) transférer dans le contrat intelligent le jeu de données de contrôle et/ou de mesure relatif à au moins ladite partie des propriétés et/ou des paramètres garantis ;
e) valider, dans le contrat intelligent, le jeu de données de contrôle et/ou de mesure au moyen des algorithmes qui y sont enregistrés, en référence à au moins ladite partie des propriétés et/ou des paramètres garantis ;
f) délivrer une autorisation de livraison sous la forme d'un code, tel qu'un code matriciel, lorsque la validation est positive ; et
g) prendre en charge, par le destinataire, les matériaux et/ou les pièces à usiner autorisés par ledit code, en vue de leur utilisation ultérieure.

2. Procédé selon la revendication 1, **caractérisé en ce que** les machines de contrôle et/ou de mesure intégrées dans le processus de contrôle certifié établissent un rapport de contrôle, lequel est importé dans le jeu de données de contrôle et/ou de mesure, de préférence sous la forme d'un document PDF.

3. Procédé selon la revendication 1 ou 2, **caractérisé en ce que** toutes les modifications des données effectuées dans le contrat intelligent sont suivies et surveillées, conformément à un concept d'autorisation prédéfini, au moyen d'une application pour smartphone et/ou d'une interface Web sur une tablette et/ou un ordinateur personnel (PC).
